# EUROPEAN PATENT APPLICATION

(11) **EP 1 550 766 A1**
(43) Date of publication of application: **06.07.2005**
(21) Application number: 03751275.3
(22) Date of filing: 18.09.2003
(51) Int. Cl.: D06H 7/04, D03D 15/12, C01B 31/02, H01M 4/96, H01M 4/88

(54) **CARBONACEOUS FIBER FABRIC, ROLL OF CARBONACEOUS FIBER FABRIC, GAS DIFFUSION LAYER MATERIAL FOR SOLID POLYMER FUEL CELL, METHOD FOR PRODUCTION OF CARBONACEOUS FIBER FABRIC, AND METHOD FOR PRODUCTION OF SOLID POLYMER FUEL CELL**

(30) Priority: 25.09.2002 JP 2002279882
(71) Applicant: Mitsubishi Chemical Corporation, Tokyo 108-0014 (JP)
(72) Inventor: HIRAHARA, Satoshi Mitsubishi Chemical Corporation, Yokohama-shi, Kanagawa 227-8502 (JP)
(74) Representative: VOSSIUS & PARTNER
(86) International application number: PCT/JP2003/011933
(87) International publication number: WO 2004/029353

(57) **Abstract**

An objective of the invention is to suppress a loosening of strands at both ends of a carbonic fiber woven fabric which is generated as a result of a repetitive rolling and unrolling.

The present invention is to conduct an anti-loosening treatment of carbonic fiber strand by means of cutting both ends of a carbonic fiber woven fabric consisting of carbonic fiber strand into the serrate or wavy form so that the ratio (t/l) of the transverse length (t) of the woven fabric to the longitudinal length (l) of the woven fabric becomes 0.2 to 5.

## Description

### FIELD OF THE INVENTION

The present invention relates to a carbonic fiber woven fabric, more particularly, a carbonic fiber woven fabric employed preferably for example in a solid polymer fuel cell, a carbonic fiber woven fabric roll, a gas diffusion layer material for a solid polymer fuel cell, a method for producing a carbonic fiber woven fabric and a method for producing a gas diffusion layer material for a solid polymer fuel cell.

### BACKGROUND OF THE INVENTION

Recently, a fuel cell became a focus of public attention as an energy source whose electricity generating efficiency is high and which is excellent from an environmental point of view. Among such fuel cells, a solid polymer fuel cell (PEFC) whose electrolyte is a solid polymer is the most attractive one. Such a solid polymer fuel cell has catalyst layers on both sides of an ion exchange membrane in the form of a film serving as an electrolyte, and these layers are further sandwiched between electricity collecting bodies serving also as gas diffusion layers, whereby forming a membrane/electrode assembly (MEA). On the further outside, a separator having grooves as fuel channels is provided to allow hydrogen or oxygen to pass through a gap between the MEA and the separator, whereby forming a cell as a whole. If one such a cell can give a potential of about 0.7 V, a stack capable of giving 210 V can for example be obtained by connecting 300 such cells reciprocally.

As a material for an electricity collecting body functioning also as a gas diffusion layer, a carbon paper has conventionally been employed, while a carbonic fiber woven fabric (carbon cross) obtained by weaving a carbonic fiber is recently proposed to be useful. Thus, this carbonic fiber woven fabric is more gas-permeable when compared with a carbon paper and allows a fuel to be supplied smoothly and evenly to a membrane electrode assembly and allows a volume-specific resistance to be reduced easily, and, also can eliminate a mechanical brittleness when being imparted with an elasticity in the direction of the thickness depending on the material or the weaving method, and its water retention and drainage can readily be controlled, thus exhibiting various advantageous aspects unlike to the carbon paper and collecting a substantial attention.

Such a carbonic fiber woven fabric can be produced for example by subjecting a woven fabric made from a spun yarn of a polyacrylonitrile-based fiber and the like to a carbonizing treatment and a graphitizing treatment. Then a carbonic fiber woven fabric thus produced is converted into an electricity collecting body functioning also as a gas diffusion layer by means of a process for coating a paste (sizing treatment) for example of a fluorine resin dispersion mixed with a carbon black.

### DISCLOSURE OF THE INVENTION

Generally, such a carbonic fiber woven fabric is handled in a scroll-like form made by rolling a woven fabric as a long cloth having a certain width around a roll core, and such a scroll-like carbonic fiber woven fabric is usually unrolled from the scroll-like form upon carbonizing, graphitizing and pressing, and then rolled again for the purpose of easy transfer to a subsequent step.

However, such a repetitive rolling and unrolling leads to a gradual loosening of a warp on both ends of a carbonic fiber woven fabric, resulting in a difficulty in handling. On the other hand, such a carbonic fiber woven fabric is subjected usually to a device referred to as a slitter to slit (cut continuously in the longitudinal direction) into suitable widths for the purpose of adjusting the fabric width at the size of a product simultaneously with being rolled again continuously, which is accompanied with a problematic loosening of a warp from both ends of the fabric, resulting frequently in a difficulty in achieving a satisfactory rolling. Such a loosening of a warp from both ends of the fabric is observed also upon sizing of the carbonic fiber woven fabric in the form of a scroll, and leads frequently to a difficulty in achieving a satisfactory rolling.

When such a loosening occurred, the loosened strand should be removed by cutting off using scissors or equivalent means, which is an extremely tiresome work and a cause of a reduced productivity, resulting in a requirement of any means for improvement. The invention is intended to solve a technical problem which became evident upon processing such a carbonic fiber woven fabric, and its objective is to provide a carbonic fiber woven fabric whose loosening of a strand from the ends of the woven fabric is suppressed.

For this purpose, the invention employs an anti-loosening treatment of a carbonic fiber strand at both ends of the carbonic fiber woven fabric. Thus, a carbonic fiber woven fabric according to the invention is a woven fabric consisting of carbonic fiber strand wherein an anti-loosening treatment of said carbonic fiber strand has been given at the end of said woven fabric. Typically, this anti-loosening treatment of said carbonic fiber strand is characterized by cutting the end of said woven fabric in a serrate form or a wavy form.

Here the size of a single unit of the serration or the wave at the end of this woven fabric which had been cut into the serrate or wavy form is characterized by the ratio (t/l) of the transverse length (t) of this woven fabric to the longitudinal length (l) of this woven fabric of 0.2 to 5. In another aspect, the single unit of the serration or the wave at the end of this woven fabric which had been cut into the serrate or wavy form is characterized by the number of woofs present within the longitudinal length of the woven fabric of 3 to 50 and the number of warps present within the transverse length of the woven fabric of 3 to 50.

On the other hand; a roll of a carbonic fiber woven fabric according to the invention comprises a roll core having a certain length and a carbonic fiber woven fabric which is rolled on said roll core and which had been subjected to an anti-loosening treatment of the carbonic fiber strand at the end of the woven fabric. Typically, the carbonic fiber woven fabric to be rolled on this roll core has been subjected to an anti-loosening treatment of the carbonic fiber strand at the end of the woven fabric of the carbonic fiber woven fabric constituting the sides of said roll.

A gas diffusion layer material for a solid polymer fuel cell according to the invention can be obtained by subjecting a carbonic fiber woven fabric consisting of a carbonic fiver strand wherein an anti-loosening treatment of said carbonic fiber strand has been given at the end of said woven fabric to a sizing treatment. Such a gas diffusion layer material for a solid polymer fuel cell has a gas permeability of 200 cm³/cm² · sec or less.

The invention is also a method for producing a carbonic fiber woven fabric comprising cutting the end of a carbonic fiber woven fabric, obtained by subjecting a carbonic precursor fiber woven fabric to a carbonizing treatment, into a serrate form or a wavy form using a slitter. In such a method for producing a carbonic fiber woven fabric, the end of said carbonic precursor woven fabric is first cut into a serrate form or a wavy form using a slitter and subsequently subjected to the carbonizing treatment.

Another aspect is a method for producing gas diffusion layer material for a solid polymer fuel cell comprising cutting the end of a carbonic fiber woven fabric, obtained by subjecting a carbonic precursor fiber woven fabric to a carbonizing treatment, into a serrate form or a wavy form using a slitter followed by subjecting said carbonic fiber woven fabric to a sizing treatment.

### BRIEF DESCRIPTION OF THE DRAWINGS

Fig. 1 is a schematic view of a roll of a carbonic fiber woven fabric as an embodiment.
Fig. 2 is a magnified view of an end of a carbonic fiber woven fabric according to one embodiment.
Fig. 3 shows a schematic view exemplifying a slitter.

In the figures, 11 designates a roll core, 12 designates a carbonic fiber woven fabric, 13 designates an end, 121 and 122 designate a textile, 131 designates a serrate end, 132 designates a wavy end, 20 designates a slitter, 21 designates an unrolling port, 22 designates a slitting part, 23 designates a rolling port, 211 designates a raw roll, and 22 designates a slit.

### BEST MODE FOR CARRYING OUT THE INVENTION

A carbonic fiber woven fabric according to one embodiment of the invention is described below.

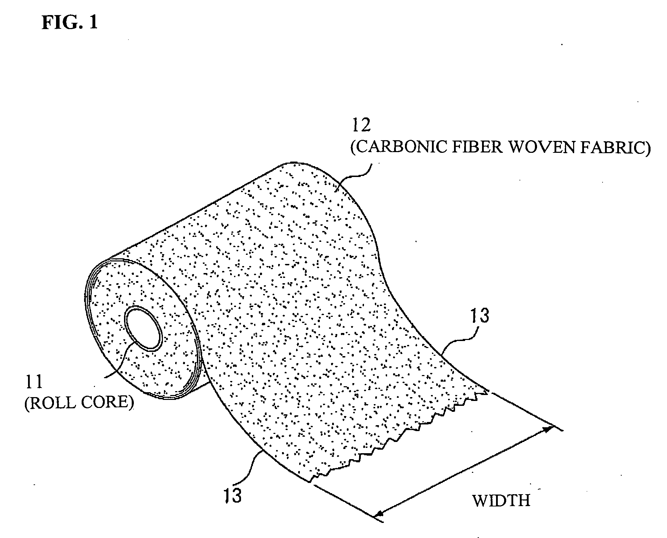

Fig. 1 is a schematic view of a roll of a carbonic fiber woven fabric as an embodiment. In this figure, a roll of a carbonic fiber woven fabric 12 constituted by a roll core 11 and a carbonic fiber woven fabric 12 in the form of a long cloth which is rolled onto the roll core 11 and whose end 13 has been subjected to an anti-loosening treatment of a carbonic fiber strand is indicated. The end 13 of the carbonic fiber woven fabric 12 which is rolled onto the roll core 11 and constitutes the side of the roll has been cut into a serrate or wavy form as described below. Since in a solid polymer fuel cell it is desirable for the purpose of an industrial mass production to form a catalyst layer continuously in a gas diffusion layer material, the carbonic fiber woven fabric 12 as a gas diffusion layer material is formed as a long cloth to which a carbon has been applied for example by a coating method. Also since the carbonic fiber woven fabric 12 is employed as a gas diffusion layer for a fuel cell, it is produced so that the thickness deviation is low and the smoothness is high, and it should be free of any strain or slack when being fixed on a fuel cell.

The type of this carbonic fiber woven fabric 12 is a woven fabric obtained by weaving a spun yarn of a carbonic fiber obtained from a known carbonic precursor fiber or a long fiber by a plain weaving, twill weaving, satin weaving and the like, with or without a coating with a conductive material such as a resin, carbonized resin, conductive carbon black and the like for the purpose of improvement in a mechanical strength or an electric property.

A carbonic fiber woven fabric has a thickness usually of 0.05 mm or more, preferably 0.10 mm or more, more preferably 0.20 mm or more, and usually of 5 mm or less, preferably 3 mm or less. The unit weight is 50 g/m² or more, preferably 60 g/m² or more, and 200 g/m² or less, preferably 180 g/m² or less. The volume resistance is 0.2 Ωcm or less, preferably 0.15 Ωcm or less, more preferably 0.10 Ωcm or less. The density is 0.2 g/cc or more, preferably 0.25 g/cc or more, and 0.6 g/cc or less, preferably 0.55 g/cc or less.

In the case of a woven fabric obtained by plain weaving a spun yarn of a carbonic fiber the warp/woof density (numbers of warps and woofs per unit length) is usually 30 to 70 per inch since the fineness is reduced by about 10% over the course during which a strand constituting the woven fabric (flame-resistant strand) is carbonized and graphitized, although it can be selected appropriately depending on whether the one-ply or two-ply strand is employed or also depending on the thickness of the strand. For example, the warp/woof density when using a two-ply strand spun yarn of 2/40 Nm is employed as a warp and a woof, per 10 cm long woven fabric, is usually 100 to 300/10 cm, preferably 180 to 250/10 cm, with regard to both of the warp and the woof.

The length per roll may for example be 50 cm or more, preferably 100 cm or more, and 300 or less, preferably 200 m or less, and a loose winding is made onto a roll core 21 at a certain tension. The width may for example be 5 cm or more, preferably 10 cm or more, and 250 cm or less, preferably 200 cm or less, more preferably 100 cm or less.

A roll core 11 is a paper pipe made from a paper, and its inner diameter is usually 1 (2.54 cm) to 10 inch (25.4 cm), preferably 2 (5.08 cm) to 5 inch (12.7 cm) although it is not limited particularly. The thickness is 1 to 10 mm, preferably 3 to 5 mm. An inner diameter less than 1 inch results in a difficulty in rolling the carbonic fiber woven fabric 12, and may cause the carbonic fiber woven fabric 12 to curl near the core. The length of the roll core 11 (longitudinal length) is equal of the carbonic fiber woven fabric 12 or longer.

The way how the carbonic fiber woven fabric 12 is rolled onto the roll core 11 preferably employs a certain constant tension which does not allow any slack for the purpose of ensuring the longitudinal uniformity of the product characteristics such as thickness. As a result of the rolling in this way employing a paper pipe of 3 inches in inner diameter, 5 mm in thickness and 30 cm in length having a weight of about 290 to 300g together with a carbonic fiber woven fabric 12 whose width is 30 cm, 50 m of the carbonic fiber woven fabric 12 gives a weight of 1.4 to 1.6 kg and a diameter of about 20 cm, while 200 m of the carbonic fiber woven fabric 12 gives a weight of 4.7 to 5.6 kg and a diameter of about 35 cm.

An aspect of the invention is an anti-loosening treatment given to the end of a carbonic fiber woven fabric. The anti-loosening treatment is a treatment for avoiding any loosening of a substantially long carbonic fiber strand from both ends of the carbonic fiber woven fabric, and typically a treatment for avoiding any loosening of a carbonic fiber strand of 20 mm or longer from both ends of the woven fabric. While as a manner of the anti-loosening treatment a procedure in which both ends or the entire surface of the carbonic fiber woven fabric are coated with a glue to bind the carbonic fiber strand to each other or a procedure in which both ends of the carbonic fiber woven fabric are cut into a form which is not a straight line may be mentioned, the procedure in which both ends of the carbonic fiber woven fabric are cut into a form which is not a straight line is preferred in view of a convenient production, especially one employing a cutting into a serrate or wavy form. A carbonic fiber woven fabric which had been cut into a serrate or wavy form is detailed below.

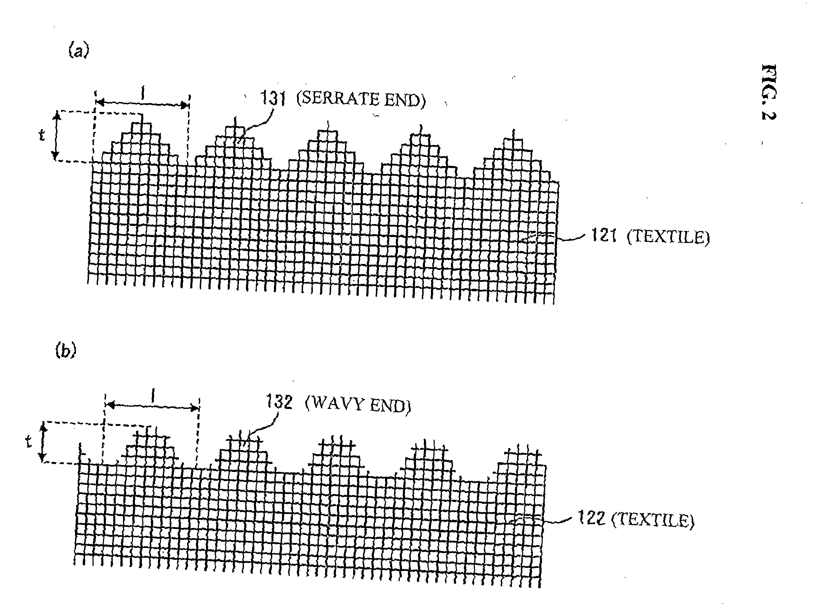

Fig. 2 (a) and (b) are magnified view of an end of a carbonic fiber woven fabric 12 according to one embodiment. Fig. 2 (a) shows the end which has been cut into a serrate form. Fig. 2 (b) shows the end which has been cut into a wavy form. In Figure 2 (a) and Figure 2 (b), the lateral direction is the longitudinal (warp) direction, while the vertical direction is the transverse (woof) direction. As shown in Fig. 2 (a), the carbonic fiber woven fabric 12 in this embodiment has a textile 121 obtained by subjecting a woven fabric (carbonic precursor fiber woven fabric) woven from a strand employing any known carbonic precursor fiber to a carbonizing treatment and a graphitizing under an inert gas atmosphere and an end 131 in a serrate form obtained by cutting the textile 121 into the serrate form. The carbonic precursor fiber and the carbonic precursor fiber woven fabric are described later in this specification.

The size of a single unit of the serration in this serrate end 131, as specified by the ratio (t/l) of the transverse length (t) to the longitudinal length (l), is that which gives a t/l of 0.2 to 5, preferably 0.3 to 2. A too large t/l may lead for example to a reduced yield of the product, and also may result in a difficulty in the processing in the subsequent steps such as a sizing treatment described below. A too small t/l may lead to a loosening of a warp.

Also shown in Fig. 2 (b), the carbonic fiber woven fabric 12 in this embodiment has a textile 122 obtained by subjecting a carbonic precursor fiber woven fabric to a carbonizing treatment and a graphitizing and an end 132 in a wavy form obtained by cutting the textile 122 into the wavy form. The size of a single unit of the wave in this wavy end 132, as specified in by the ratio (t/l) of the transverse length (t) to the longitudinal length (l), is that, as detailed in Fig. 2 (a), which gives a t/l of 0.2 to 5, preferably 0.3 to 2.5.

While the longitudinal length (l) and the transverse length (t) of a single unit of the serration or the wave at the serrate or wavy end in Fig. 2 (a) and Fig. 2 (b) are not limited particularly, the longitudinal length (l) is usually 3 to 15 mm, preferably 4 to 12 mm, while the transverse length (t) is 2 to 15 mm, preferably 3 o 12 mm. The number of the woofs present in the range of this longitudinal length (l) may for example be 3 to 50, preferably 5 to 40, while that of the warps present in the range of the transverse length (t) may for example be 3 to 50, preferably 5 to 40.

The fineness of a strand constituting a carbonic fiber woven fabric here may for example be No.16 meter count or more, preferably No.18 meter count or more, more preferably No.20 meter count or more, and No. 60 meter count or less, preferably No.55 meter count or less. In the case of a one-ply strand, the No. meter count is 1/16 Nm or more, preferably 1/18 Nm or more, more preferably 1/20 Nm or more, and 1/60 Nm or less, preferably 1/55 Nm or less. In the case of a two-ply strand, the No. meter count is 2/32 Nm or more, preferably 2/36 Nm or more, more preferably 2/40 Nm or more, and 2/120 Nm or less, preferably 2/110 Nm or less. A No. meter count of the strand exceeding 1/16 nm or 2/32 Nm may lead to a too large number of the fluffs per unit length. A No. meter count of the strand less than 1/60 nm or 2/120 Nm may lead to a reduced tensile strength of the strand.

While a carbonic fiber woven fabric 12 is obtained through the steps for subjecting a carbonic precursor fiber to spinning, flame resistance-imparting treatment, carbonizing, (graphitizing), the fineness is reduced by about 10 to 20% over the steps for carbonizing the flame resistant strand followed by the graphitizing. The fineness of a strand constituting a woven fabric in this embodiment is in terms of the strand of a woven fabric as a final product, and can be measured by pulling a strand out of the woven fabric.

A gap between strands of warps and woofs when observed by a scanning electron microscope is preferably 10 to 150 µm as a pore size corresponding to a gap between strands for the purpose of ensuring satisfactory water retention and drainage upon use as a gas diffusion layer of a fuel cell. An example of preferable woven fabrics is one obtained by plain weaving a two-ply strand of No.40 to 60 count consisting of a monofilament whose diameter is 7 to 10 µm at a density of 30 to 70 strands per inch of both of warps and woofs.

Since a metal impurity in a carbonic fiber woven fabric 12 may lead to a reduced cell property due to an electrolytic reaction of a generated water upon operation of the fuel cell, it should be reduced as far as possible. The metals are present in amounts of 50 µg/g or less of iron, 50 µg/g or less of nickel and 100 µg/g or less of sodium. The metal impurities in a woven fabric can be reduced by washing the woven fabric or its starting carbonic fiber as well as a source strand thereof with an acid such as hydrochloric acid and acetic acid.

It is also possible to deposit onto such a carbonic fiber woven fabric 12 a binder, preferably an organic binder such as a resin or a pitch to bind carbonic fibers constituting the woven fabric to each other. The deposition of an organic binder can be accomplished by immersing the woven fabric in a solution of the organic binder or by coating the woven fabric with such a solution. In a method for depositing the organic binder, the organic binder is dissolved in a suitable solvent such as water, methanol, acetone, toluene, xylene, quinoline, N,N-dimethylformamide and the like to form a solution, in which the woven fabric is then immersed to deposit the organic binder onto the woven fabric, which is then dried, and then heated by a hot press, calendar roll, oven and the like, whereby curing the organic binder. The organic binder solution used for immersing a woven fabric is usually one at 0.1 to 10% by weight, preferably 0.5 to 5% by weight. It is not only possible to just cure the organic binder but also to heat the woven fabric having the organic binder deposited thereon in an inert atmosphere such as nitrogen or argon atmosphere whereby carbonizing the organic binder, and also further effecting a graphitizing.

A carbonic fiber woven fabric 12 thus obtained comprises 100% by weight of a carbonic fiber, and may also contain a conductive material such as a particulate activated carbon, conductive carbon black, various carbonized pitches. For example, a pitch may be dissolved in an organic solvent to form a pitch solution, in which a particulate activated carbon or conductive carbon black is suspended to form a suspension, which is coated on the woven fabric obtained as described above and then heated in an inert gas whereby carbonizing the pitch. In such a case, the amount of the carbonic fiber in the woven fabric is 60% by weight or more, preferably 80% by weight or more.

While a carbonic fiber woven fabric 12 thus obtained can be used directly as a material for a gas diffusion layer of a fuel cell, it may further be processed and then used as a material for a gas diffusion layer. For example, for the purpose of ensuring a suitable water content in a membrane electrode body constituting a cell or removing impurities contained in a fuel or an oxidizer supplied to the cell by adsorption to avoid the deterioration of the cell property, the carbonic fiber woven fabric obtained as described above can be brought into contact with a water vapor or carbon dioxide at 800 to 1200°C or air at 300 to 500°C to vaporize a part of a carbonic material to form micropores in the carbonic fiber, whereby obtaining a woven fabric consisting of a porous carbonic fiber.

A known carbonic precursor fiber employed for obtaining a carbonic fiber woven fabric 12 according to this embodiment may for example be a polyacrylonitrile-based, pitch-based, cellulose-based, polynosic-based, phenol-based resins or mixtures thereof. Usually, a pitch-based or polyacrylonitrile-based resin is employed. Among these, a polyacrylonitrile-based carbon precursor fiber is particularly preferred. While various polyacrylonitrile-based carbon precursor fibers exist depending on the acrylonitrile unit content including one whose starting material is a polyacrylonitrile comprising about 100% of acrylonitrile, one whose starting material is an acrylonitrile-based copolymer whose main component is acrylonitrile which is contained in an amount of 50% or more, and one whose starting material is an acrylonitrile-based copolymer containing acrylonitrile comprising 20 to 50% acrylonitrile, a carbonic precursor fiber whose starting material is any of those listed above can be employed.

The diameter of a monofilament of such a carbonic precursor fiber is usually 6 to 50 µm, preferably 6 to 30 µm. A woven fabric made from a spun yarn consisting of a monofilament whose diameter is 7 to 15 µm is especially preferred, since it undergoes less deviation in the thickness upon a carbonizing or graphitizing as described below.

Such a carbonic precursor fiber can be subjected to a flame resistance-imparting treatment prior to the weaving into a woven fabric. The flame resistance-imparting treatment (anti-fusion treatment) is a reaction for introducing an oxygen atom into the molecular structure of a pitch or polyacrylonitrile, and is conducted usually at 200 to 300°C, or not exceeding 400°C at highest, while effecting a contact with oxygen for several ten minutes. A larger amount of the oxygen introduced into the molecular structure is believed to exert a higher anti-fusion effect upon a carbonizing treatment as described below. As an index of such an anti-fusion effect, a limit oxygen intensity (LOI value) required for maintaining the burning of a fiber is employed. For the purpose of avoiding any fusion between fibers as experienced in an ordinary carbonic fiber production, it is believed that the flame resistance-imparting treatment should be effected so that the LOI value becomes 35 to 60. Also in the production of a carbonic fiber woven fabric 12 according to this embodiment, it is preferable to conduct the flame resistance-imparting treatment so that the LOI value of the carbonic precursor fiber becomes 35 to 60.

Thus, in order to avoid any fusion between the carbonic fibers constituting a woven fabric, the flame resistance-imparting effect is conducted so that the LOI value becomes 35 to 60. On the contrary, the fibers may be rather fused to obtain a rigid woven fabric whereby improving the characteristics of a fuel cell by means of conducting the flame resistance-imparting treatment so that the LOI value becomes less than 35, especially 33 or less. Since an excessively low LOI value leads to an extensive fusion upon a subsequent carbonizing treatment which results in a brittle carbonic fiber woven fabric, it is preferable to conduct the flame resistance-imparting treatment so that the LOI value becomes 20 or more, especially 25 or more. The LOI value can be adjusted by varying the temperature or the duration of the contact with oxygen during the flame resistance-imparting treatment.

A preferred example of such a flame resistance-imparting treatment is the use of a flame resistant fiber obtained by subjecting a polyacrylonitrile-based fiber to a flame resistance-imparting treatment at 200 to 300°C in air. The polyacrylonitrile-based fiber to be subjected to the flame resistance-imparting treatment may be either one obtained by spinning a long filament or short filament, and also may be either one-ply or two-ply strand. Upon the flame resistance-imparting treatment, the fiber may be stretched to improve the tenacity of the fiber.

While a carbonic precursor fiber strand consisting of such a carbonic precursor fiber may be either a filament strand or a spun yarn, a spun yarn is preferred since it gives a dense and uniform woven fabric texture, and also exhibits a high strand productivity. As a spinning method for obtaining a spun yarn may be any known method, such as cotton spinning, 2-inch spinning, combing spinning, carding spinning, direct spinning and the like. In the case of a polyacrylonitrile-based flame resistant fiber, it is preferred to use a spun yarn obtained by conducting a combing spinning of a sliver obtained by tearing a polyacrylonitrile continuous filament tow.

A strand employed in such a weaving may be a one-ply strand, two-ply strand, triple twisted strand, filament strand, as well as a composite strand consisting of carbonic precursor fibers from different starting materials. While a spun yarn may be either a two-ply or one-ply strand, a two-ply strand is usually preferred since it can give a uniformly thick woven fabric because of an ability of giving a higher tensile strength of the strand when compared with a one-ply strand. In the invention, the fineness (No. count) of a strand in a No. meter count is usually No.14 count or more, preferably No.16 count or more, more preferably No. 18 count or more, and usually No. 50 count or less, preferably No.45 count or less. In the case of a one-ply strand, the No. meter count is 1/14 Nm or more, preferably 1/16 Nm or more, more preferably 1/18 Nm or more, and usually 1/50 Nm or less, preferably 1/45 Nm or less. In the case of a two-ply strand, the No. meter count is 2/28 Nm or more, preferably 2/32 Nm or more, more preferably 2/36 Nm or more, and usually 2/100 Nm or less, preferably 2/90 Nm or less. A No. meter count of the one-ply strand exceeding 1/14 nm or 2/28 Nm may lead to a too large number of the fluffs per unit length. A No. meter count less than 1/50 Nm or 2/100 Nm may lead to a reduced tensile strength of the strand.

The number of twist of a strand can be measured in accordance with JIS L 1095 (General spun yarn testing method), and the number of twist of a one-ply stand is usually 300/m or more per meter of the strand, preferably 500/m or more, and usually 800/m or less, preferably 700/m or less. While a preferred number of twist may vary slightly depending on the No. count of the strand, a number less than 300 may lead to an increased number of fluffs of the strand. An increased number of twist results in a reduced number of fluffs, but the fluff-reducing effect of the increase in the number of twist plateaus at a number of 700 or more. In the case of a two-ply strand, the upper number of twist is usually 300/m or more per meter of the strand, preferably 400/m or more, and usually 800/m or less, preferably 750/m or less. A small upper number of twist leads to an increased number of fluffs. A large upper number of twist leads to an increased frequency of the strand break upon twisting and also makes the strand to have more uneven thickness. The lower number of twist is usually 500/m or more, preferably 600/m or more, and usually 900/m or less, preferably 850/m or less. A small lower number of twist leads to an increased number of fluffs. A large lower number of twist leads to an increased frequency of the strand break upon twisting.

A carbonic precursor fiber strand thus made flame resistant may be woven to form a flame resistant woven fabric, or a carbonic precursor fiber strand which had not been made flame resistant such as a polyacrylonitrile-based fiber strand itself may be woven to form a woven fabric, which is then subjected to a flame resistance-imparting treatment to obtain a flame resistant woven fabric. In such a case, the woven fabric is brought into contact with an oxidizing gas such as air, ozone, nitrogen oxide and the like to form a flame resistant woven fabric having a suitable LOI value. The texture of a woven fabric may be any of plain weave, twill weave, satin weave, and any other textures, although the plain weave is preferable because of a largest number of the crossings of warps with woofs per unit area which leads to a volume-specific resistance of the woven fabric. While the warp/woof density (numbers of warps and woofs per unit length) is usually 20 to 60 per inch, it can be selected appropriately depending on whether the one-ply or two-ply strand is employed or also depending on the thickness of the strand.

The unit weight, i.e., the weight of a unit area of a carbonic precursor fiber woven fabric obtained by weaving such a carbonic precursor fiber strand is usually 50 g/m² or more, preferably 60 g/m² or more, more preferably 80 g/m² or more, and usually 350 g/m² or less, preferably 250 g/m² or less. A too small unit weight leads to a reduction in the rigidity and the tensile strength, while a too large unit weight results in an excessively stuffed texture which leads to a reduced gas diffusibility.

A method for producing a carbonic fiber woven fabric 12 according to this embodiment is described below. In a method for producing a carbonic fiber woven fabric 12 according to this embodiment, a carbonic precursor fiber woven fabric described above is carbonized and then graphitized, and then the end of the woven fabric thus treated are cut into a serrate form or wavy form.

First, the carbonizing treatment of the carbonic precursor fiber woven fabric is discussed. The carbonizing treatment is conducted for example by heating in an inert gas at 400°C or higher, preferably 600°C or higher, and 1400°C or lower, preferably 1300°C or lower. In view of the conductivity of the woven fabric, the heating is effected preferably at 700°C or higher, more preferably 800°C or higher, especially 900°C or higher. In the carbonizing treatment, the carbonization is conducted at 800 to 1400°C through a thermolysis temperature of 300 to 750°C. The temperature elevation rate in the thermolysis is 5 to 300°C/minute, and the duration of the constant temperature in the carbonizing process is preferably 1 minutes or longer and within 4 hours. Depending on the thermal capacity of the heat treatment furnace or on the transportation rate of the original material woven fabric into the furnace, it is acceptable to introduce the woven fabric from the start into a carbonizing zone at a certain temperature without establishing a thermolysis zone of 75°C or less, and due to the heat received by the woven fabric in the carbonizing zone the temperature of the woven fabric rises, thermolysis occurs, and carbonizing proceeds. In the furnace, the gas atmosphere is in any case preferably inert with an oxygen concentration of 100 ppm or less.

While the carbonizing furnace to conduct such a carbonizing treatment may be either a batch heat treatment furnace or a continuous heat treatment furnace, a continuous heat treatment furnace is preferred because of its advantageous ability of allowing the carbonizing treatment of a long cloth woven fabric to be conducted continuously and uniformly. As used herein, the continuous heat treatment furnace means a lateral or vertical continuous heat treatment furnace fitted with multiple-stage heating means, while the lateral one is more preferred than the vertical one due to a less deformation or unevenness of the woven fabric due to the weight of the fabric itself. The transportation of a material to be treated in the furnace is preferably a transportation by a direct placement on a belt with or without a metal (steel, stainless and the like) and a movement at a constant speed by controlling the belt externally.

Upon such a carbonizing treatment, selvages formed at both ends of a carbonic precursor fiber woven fabric as a result of the weaving are preferably cut off. Since both ends of a woven fabric is slightly thicker than the textile because it employ somewhat bolder warp when compared with the textile for the purpose of reinforcing or employ as a warp a combination of two warps which are the same to those used in the textile, the carbonizing treatment with the selvages still remaining results in a difference in the % shrinkage between the center and both ends of the woven fabric, which may lead to a wrinkle in the woven fabric.

The graphitizing is discussed below. The carbonized carbonic precursor fiber woven fabric is then further subjected to a graphitizing. Such a graphitizing may use either a batch treatment furnace or a continuous treatment furnace. In the case of a batch treatment, a roll of a carbonic precursor fiber woven fabric rolled in a certain width after the carbonizing treatment is placed directly in the batch treatment furnace, where the graphitizing is conducted. In the case of the continuous treatment, a long cloth woven fabric is delivered continuously into the continuous heat treatment furnace, where the graphitizing is conducted.

The temperature of such a graphitizing may for example be 1400°C or higher, preferably 1600°C or higher, and 3000°C or less, preferably 2500°C or less. A temperature at 1400°c or higher leads to a further reduced volume-specific resistance of a woven fabric, which is suitable for a gas diffusion layer material. The treatment at about 3000°C or less gives a volume-specific resistance after the heat treatment which is not problematic upon use as a gas diffusion layer material. The duration of the graphitizing is usually 10 minutes or longer, preferably 20 minutes or longer, and usually 4 hours or shorter, preferably 2 hours or shorter. A treatment time less than 10 minutes does not allow the graphitizing to be completed uniformly. On the other hand, a longer treatment time reduces the productivity and the thermal efficiency, and may allows the impurities generated from a heat insulant or an exothermic material of the graphitizing furnace to make the woven fabric dirty.

A method for cut the end of the woven fabric thus carbonized and graphitized into a serrate or wavy form is discussed below. A procedure for cutting the end of the woven fabric thus treated into a serrate or wavy form is conducted by a device for cutting a rolled sheet longitudinally and continuously into suitable widths while rolling continuously at the same time, which is called a slitter.

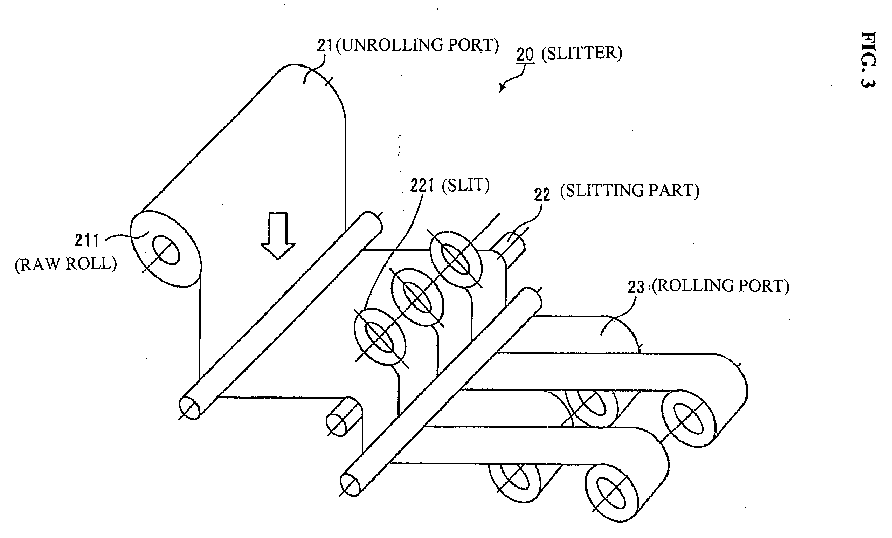

Fig. 3 is a schematic view of a slitter. The slitter 20 indicated here has an unrolling port 21 which rolls a long cloth woven fabric from a roll (raw roll) 211 formed by rolling a carbonized and graphitized carbonic fiber woven fabric onto a roll core, a slitting part 22 provided with plural metal slits 221 for cutting this rolled woven fabric continuously into certain widths, and a rolling port 23 which rolls the woven fabric whose end is cut continuously. Using such a slitter 20, the raw roll 211 of the carbonic fiver woven fabric is unrolled at the unrolling port 21, cut by plural of slits 311, and then rolled again as a roll having a certain width at the rolling port 23. In this slitting part 22, a metal slit 221 is provided for cutting the end of the carbonic fiber woven fabric into a serrate or wavy form.

The rolling speed of the slitter 20 may for example be 30 cm/minutes to 50 m/minutes, preferably 1 m/minutes to 20 m/minutes. An excessively high rolling speed may lead to a difficulty in cutting into uniform widths. An excessively low rolling speed may lead to a reduced productivity. While the widths of the carbonic fiber woven fabric cut by plural slits 221 are not limited particularly, they are selected depending on the sizing process for a gas diffusion layer material for a solid polymer fuel cell described below and may for example be 20 to 30 cm. It is also preferable to pass the carbonic fiber woven fabric whose end has been cut into a serrate or wavy form by the slits 221 through a suitable dust catching device, thereby removing any short waste threads remaining at the serrate or wavy ends. As a result of such a preliminary removal of the short waste threads, any subsequent step becomes free of problematic strand loosening or formation of waste threads.

While in this embodiment the selvages formed at both ends of a carbonic precursor fiber woven fabric prior to the carbonizing treatment is cut off, it is preferable, upon such a selvage cutting procedure, to use a slitter to cut both ends of the carbonic precursor fiber woven fabric into a serrate or wavy form. Prior to carbonizing the carbonic precursor fiber woven fabric, both ends of the woven fabric are cut into a serrate or wavy form whereby suppressing any loosening of warps from the ends of the woven fabric upon carbonizing and graphitizing treatments while repeating the rolling and unrolling of the long cloth, resulting in a easy passage in the subsequent steps. An excessive height of the serration or wave unit leads to an increase in short cut waste threads as well as a problematic reduction in the yield of the final product.

In this embodiment, a pressing may be conducted for reducing the variation in the thickness of a carbonic precursor fiber woven fabric or carbonic fiber woven fabric. Such a pressing may be conducted by a pressing machine such as a plane pressing machine whose pressing surface is a plane and a roll pressing machine conducting the pressing by a roll, any of which may be employed, although a roll pressing machine is preferred since it can press a long cloth carbonic precursor fiber woven fabric in a continuous manner. A pressurization in a pressing machine may be hydraulic pressurization, air compressing pressurization, spring pressurization and the like, any of which can be employed, although a hydraulic pressurization at a high pressure is preferred. This roll pressing machine conducts a pressing continuously while sandwiching a woven fabric between rotating metal upper and lower rolls. The number of times of the pressing treatments to be repeated may not only one time but also 2 to 10 times. In any case, the number of the woven fabrics to be pressed each time by a pressing machine is one, but it is also possible that 2 to 20 fabrics are stacked and pressed together all at once for the purpose of promoting the productivity. However, there may be no inhibitory effect on the deviation in the thickness after the pressing of the woven fabric when pressing 20 fabrics or more.

In such a pressing, in order to enhance the inhibitory effect on the deviation in the thickness, a woven fabric before pressing may be impregnated with a polyvinyl alcohol, a glue such as starch, a solution in an organic solvent of a thermosetting resin or thermoplastic resin such as a phenol resin, furan resin, polyimide resin, polyethylene resin, polypropylene resin, polyimide resin, polyamide resin and the like or a finely divided particulate of such a resin. In addition, the pressing may be conducted at a pressing plane temperature higher than room temperature (for example 50 to 500°C, preferably 100 to 300°C). In such a case, a further uniform pressing can be accomplished because a resin mentioned above is molten or cured or water contained in the woven fabric is removed. Such a pressing is advantageous not only in terms of a reduction in the variation in the thickness but also in terms of a reduction in fluffing of a several mm-length fluffs present on the surface of a carbon fiber woven fabric.

A carbonic fiber woven fabric 12 can be used preferably as a gas diffusion layer material for a solid polymer fuel cell when being subjected to a sizing treatment. As used herein, a sizing treatment means a treatment in which a carbonic fiber woven fabric 12 is coated with a paste-like fluid/ink-like fluid comprising a fluorine resin such as a polytetrafluoroethylene and a carbon black, dried, heated and then hot-pressed. As a result of the sizing treatment, advantageous properties such as a smoothness of the gas diffusion layer material, immobilization of a carbonic fiber strand constituting a carbonic fiber woven fabric 12, impartment with a rigidity and the like can be obtained. Such a gas diffusion layer material is bound to both sides of a membrane electrode to form a membrane electrode body of a solid polymer fuel cell, further outside of which a separator is bound, whereby establishing a fuel cell stack. In a method for forming a membrane electrode, a polymer solid electrolyte membrane is coated with a paste-like fluid/ink-like fluid (catalyst paste) of a dispersion of a fluorine resin such as a polytetrafluoroethylene and a catalyst substance, or of a polymer solid electrolyte resin solution and a catalyst substance, dried, heated and then hot-pressed. It may also be mentioned that a paste-like fluid/ink-like fluid of a dispersion of a fluorine resin such as a polytetrafluoroethylene and a catalyst substance is coated onto a release sheet and dried to form a catalyst layer, which is bound to a polymer solid electrolyte membrane by a hot pressing. As used herein, a catalyst substance may for example be a microparticle of a noble metal such as platinum or platinum-ruthenium supported on a carbon black.

In another method for producing a membrane electrode body, a carbonic fiber woven fabric 12 according to this embodiment may be coated with a catalyst paste using a suitable coating machine to form an assembly of a gas diffusion layer and a catalyst layer, which is then hot-pressed with a polymer solid electrolyte membrane to form a membrane electrode body. In any method, the carbonic fiber woven fabric 12 according to this embodiment can easily be handled since it undergoes a reduced loosening of strands. A solid polymer fuel cell employing the carbonic fiber woven fabric 12 according to this embodiment can preferably be employed as a power source for an automobile or an electricity cogeneration system.

The gas permeability of a gas diffusion layer material employed here is measured by a breathable test (FRAGILE type measurement) under JIS L 1096 (general textile testing method). The measured value of the gas permeability obtained by this assessing method reflects the degrees of the gas permeability and water retention ability when using a carbon fiber as a gas diffusion layer material for a fuel cell. The gas permeability of a woven fabric is usually 200 cm³/cm² · sec or less, preferably 150 cm³/cm² · sec or less. Although a lower gas permeability is more preferable since it improves the water retention ability, the woven fabric preferably has a gas permeability of 30 cm³/cm² · sec or more when used as a gas diffusion layer material, and 50 cm³/cm² · sec or more when applied to a high power use requiring a great current at an instance such as a solid polymer fuel cell for an automobile.

### EXAMPLES

A carbonic fiber woven fabric 12 according to this embodiment is further detailed in the following Examples which are not intended to restrict the invention.

### (Example 1)

A polyacrylonitrile flame resistant spun yarn (two-ply strand of No.40 meter count, 2/40 Nm, LOI value: 50) was employed to obtain a plain weave of a carbonic precursor fiber woven fabric. The warp/woof density of this carbonic precursor fiber woven fabric is 43/inch x 40/inch, and the width, length, thickness, unit weight and density were 110 cm, 150 cm, 0.318 mm (average), 171 g/m² (average) and 0.538 g/cc, respectively.

Then, the slitter was operated to cut the ends of this carbonic precursor fiber woven fabric using a serrate slitter and a woven fabric of 50 cm in width and 150 cm in length was rolled at a speed of 10 m/min under a certain tension onto a paper roll core whose inner diameter was 3 inches. If a serration unit of the serrate end here had a longitudinal length 1=6 mm and a transverse length t=3 mm (t/1=0.5), then the number of woofs within 1 is 8 and the number of warps within t is 4.

Then, the carbonic precursor fiber woven fabric whose ends had been cut into a serrate form by a slitter was pressed by passing through the gap between the upper roll and the lower roll at a conveying speed of 10 m/min under a contact pressure of 500 kg/cm² using a roll pressing machine. The thickness of the pressed carbonic precursor fiber woven fabric was 0.299 mm (average), and the unit weight was 171 g/m² and the density was 0.571 g/cc.

Subsequently, the roll of this carbonic precursor fiber woven fabric of 50 cm in width and 150 cm in length was placed in a unrolling machine, where it was unrolled at a speed of 20 cm/min while introducing the carbonic precursor fiber woven fabric to the inlet of a horizontal continuous carbonizing furnace (maximum temperature:950°C), whereby conducting a carbonizing treatment while rolling the woven fabric exiting the outlet using a rolling machine continuously. The roll thus obtained did not exhibit a loosening of warps which was observed in a woven fabric which is slit by a straight round blade upon unrolling. Furthermore, the sides of the carbonic precursor fiber woven fabric thus rolled exhibited slight carbonic precursor fiber strands which was as short as 6 mm or less, but there was no loosening of warps as long as 20 mm or more.

This carbonic fiber woven fabric after the carbonizing treatment had a thickness of 0.255 mm (coefficient of variation in thickness: 2.2%), a unit weight of 118 g/m², a density of 0.463 g/cc and a volume-specific resistance of 0.13 Ωcm. The thickness and the variation in the thickness were determined in such a manner that a 40 cm-square sample whose sides were in the directions of the warps and the woofs of the woven fabric was cut out and its two diagonal lines were divided equally into 11 sections to obtain 20 points in total, at which the thickness was measured and the mean and the variation (standard deviation of the thickness/mean of the thickness x 100%) of each sample were calculated. Then, this determination was conducted at an interval of about 30 cm to average the thickness mean and the coefficient of variation of respective samples, whereby obtaining the thickness and the coefficient of variation in the thickness for the entire long cloth of the carbonic fiber woven fabric. The measurement of the thickness was conducted by bringing a disc of 5 mm in diameter into contact with the surface of the woven fabric under a pressure of about 10 g/cm². The unit weight was determined by measuring the weight of a 40 cm-square sample.

Then, the roll of the carbonized carbonic fiber woven fabric was placed in a vacuum graphitizing furnace, and graphitized at 2000°C. The sides of the roll of the carbonic fiber woven fabric after the graphitizing treatment exhibited no loosening of a strand as long as 20 mm. The carbonic fiber woven fabric after the graphitizing treatment had a thickness of 0.246 mm (coefficient of variation in thickness: 2.3%), a unit weight of 101 g/m², a density of 0.410 g/cc and a volume-specific resistance of 0.02 Ωcm.

The roll of this carbonic fiber woven fabric after the graphitizing treatment was placed in the unrolling port of the slitter, and slit into a width of 20 cm using a certain serrate slitting blade, and rolled onto a paper roll core of 3 inches in inner diameter continuously at 5 m/min. The serration unit of the serrate end here had a longitudinal length (l) of 6 mm and a transverse length (t) of 3 mm (t/l=0.5), and the number of woofs within l was 9 and the number of warps within t was 5.

When this roll of the carbon fiber woven fabric after the graphitizing treatment was unrolled continuously at the unrolling port of the slitter, carbonic fiber strand as short as 6 mm or less were observed slightly, but there was no loosening of warps as long as 20 mm or more, and there was no entangling of the strands into the carbonic fiber woven fabric. Both ends of the roll of the carbonic fiber woven fabric after the rolling exhibited no loosening of a strand as long as 20 mm. The sides of the roll also exhibited no loosening of warps as long as 20 mm when examined by touching with hands.

### (Example 2)

Under the condition similar to that in Example 1, the end of a plain weave of a carbonic precursor fiber woven fabric employing a pre-carbonized polyacrylonitrile flame-resistant spun yarn were cut using a serrate slitter and a woven fabric of 50 cm in width and 150 cm in length was rolled. If a serration unit of the serrate end here had a longitudinal length l=6 mm and a transverse length t=6 mm (t/l=1), then the number of woofs within l is 8 and the number of warps within t is 8. Similarly to Example 1, this roll exhibited slight carbonic precursor fiber strands as short as 6 mm or less were observed upon unrolling in the carbonizing treatment, but there was no loosening of warps as long as 20 mm or more, and there was no entangling of the strands into the carbonic precursor fiber woven fabric. The sides of the roll after the rolling exhibited no loosening of warps as long as 20 mm.

Then, the woven fabric was carbonized and graphitized, and then slit into a width of 20 cm using a certain serrate slitting blade, and rolled onto a paper roll core of 3 inches in inner diameter. The serration unit of the serrate end here had a longitudinal length (l) of 9 mm and a transverse length (t) of 10 mm (t/l=1.11), and the number of woofs within l was 9 and the number of warps within t was 10. Also similarly to Example 1, the carbonic fiber strand as short as 6 mm or less were observed slightly upon unrolling, but there was no loosening of warps as long as 20 mm or more, and there was no entangling of the strands into the carbonic fiber woven fabric. The end of the roll after the rolling exhibited no loosening of warps as long as 20 mm. The sides of the roll also exhibited no loosening of warps as long as 20 mm when examined by touching with hands.

### (Example 3)

Under the condition similar to that in Example 1 except for using a wavy slitter instead of a certain serrate slitter, the end of a carbonic precursor fiber woven fabric was cut. If a wave unit of the wavy end here had a longitudinal length 1=6 mm and a transverse length t=2 mm (t/l=0.33), then the number of woofs within l is 8 and the number of warps within t is 2. Similarly to Example 1, this roll exhibited slight carbonic precursor fiber strands as short as 6 mm or less were observed upon unrolling in the carbonizing treatment, but there was no loosening of warps as long as 20 mm or more, and there was no entangling of the strands into the carbonic precursor fiber woven fabric. The sides of the roll after the rolling exhibited no loosening of warps as long as 20 mm.

Then, the woven fabric was carbonized and graphitized, and then slit using a certain wavy slitting blade. The serration unit of the wavy end had a longitudinal length (l) of 9 mm and a transverse length (t) of 5 mm (t/l=0.56), and the number of woofs within l was 9 and the number of warps within t was 5. Also similarly to Example 1, the carbonic fiber strand as short as 6 mm or less were observed slightly upon unrolling, but there was no loosening of warps as long as 20 mm or more, and there was no entangling of the strands into the carbonic fiber woven fabric. The end of the roll after the rolling exhibited no loosening of warps as long as 20 mm. The sides of the roll also exhibited no loosening of warps as long as 20 mm when examined by touching with hands.

### (Example 4)

As in Example 1, the end of a carbonic precursor fiber woven fabric before the carbonizing treatment was cut using a certain serrate slitter, and then short waste strand present on the end cut by this slitter was removed using a suction device, and then subsequent carbonizing and graphitizing treatments were conducted. The roll of the carbonic precursor fiber woven fabric thus processed underwent extremely low loosening of warps as long as 20 mm or waste strand formation upon rolling, and also underwent no entangling of the strands into the carbonic precursor fiber woven fabric. Also the roll after the graphitizing treatment underwent extremely low loosening of warps as long as 20 mm or waste strand formation upon rolling, and also underwent no entangling of the strands into the carbonic fiber woven fabric.

### (Comparative Example 1)

Under the condition similar to that in Example 1 except for using a straight round blade slitter instead of a certain serrate slitter, the end of a carbonic precursor fiber woven fabric was cut. Subsequently, the roll of the carbonic precursor fiber woven fabric whose end was cut was placed in a unrolling machine, where it was unrolled at a speed of 20 cm/min, while introducing the carbonic precursor fiber woven fabric to the inlet of a horizontal continuous carbonizing furnace (maximum temperature: 950°C) under a nitrogen atmosphere, whereby conducting a carbonizing treatment while rolling the woven fabric exiting the outlet using a rolling machine continuously. This roll allowed upon unrolling a large amount of warps to be loosened out, resulting in an entangling of the loosened carbonic precursor fiber strands with the roll, because of which the entangled carbonic precursor fiber strands should be cut off using scissors for executing the unrolling. The sides of the roll after rolling had a large amount of loosened warps as long as 20 mm or more.

While the fabric was slit using a straight round blade slitter after the carbonizing treatment followed by the graphitizing treatment, the roll allowed upon unrolling a large amount of warps to be loosened out, resulting in an entangling of the loosened carbonic precursor fiber strands with the roll, because of which the entangled carbonic fiber strand should be cut off using scissors for executing the unrolling, followed by slitting and rolling. The carbonic fiber woven fabric underwent the formation of wrinkles upon entangling the loosened carbonic fiber strand with the roll. The sides of the roll after rolling exhibited no loosened carbonic fiber strand, but readily allowed long warps to be loosened when being touched by hands.

While the present invention was described in details referring to a particular embodiment, those skilled in the art can made any modification or variation without departing from the spirit and the scope of the invention.

The present application is based on the Japanese Patent Application (JPA-2002-279882) filed on September 25, 2002, the entire of which is incorporated herein by reference.

### INDUSTRIAL APPLICABILITY

Thus, the invention can suppress the loosening of strand at the end of a carbonic fiber woven fabric.

## Claims

1. A carbonic fiber woven fabric which is a woven fabric consisting of carbonic fiber strand, wherein an anti-loosening treatment of said carbonic fiber strand has been given at the end of said woven fabric.

2. The carbonic fiber woven fabric according to claim 1, wherein carbonic fiber strand of 20 mm or longer is not loosened out from the carbonic fiber woven fabric.

3. The carbonic fiber woven fabric according to claim 1 or 2, wherein said anti-loosening treatment of said carbonic fiber strand is to cut the end of said woven fabric in a serrate form or a wavy form.

4. The carbonic fiber woven fabric according to claim 3, wherein the size of a single unit of the serration or the wave at the end of said woven fabric which had been cut into the serrate or wavy form is **characterized by** the ratio (t/l) of the transverse length (t) of said woven fabric to the longitudinal length (l) of said woven fabric of 0.2 to 5.

5. The carbonic fiber woven fabric according to claim 3 or 4, wherein the single unit of the serration or the wave at the end of said woven fabric which had been cut into the serrate or wavy form is **characterized by** the number of woofs present within the longitudinal length of said woven fabric of 3 to 50 and the number of warps present within the transverse length of said woven fabric of 3 to 50.

6. A roll of a carbonic fiber woven fabric comprising a roll core having a certain length and a carbonic fiber woven fabric which is rolled on said roll core and which had been subjected to an anti-loosening treatment of the carbonic fiber strand at the end of the woven fabric.

7. The roll of a carbonic fiber woven fabric according to claim 6, wherein said carbonic fiber woven fabric to be rolled on said roll core has been subj ected to an anti-loosening treatment of the carbonic fiber strand at the end of the woven fabric of said carbonic fiber woven fabric constituting the side of said roll.

8. A gas diffusion layer material for a solid polymer fuel cell obtained by subjecting a carbonic fiber woven fabric consisting of a carbonic fiver strand wherein an anti-loosening treatment of said carbonic fiber strand has been given at the end of said woven fabric to a sizing treatment.

9. The gas diffusion layer material for a solid polymer fuel cell according to claim 8, wherein gas permeability is 200 cm³/cm² · sec or less.

10. A method for producing a carbonic fiber woven fabric, which comprises cutting the end of a carbonic fiber woven fabric, obtained by subjecting a carbonic precursor fiber woven fabric to a carbonizing treatment, into a serrate form or a wavy form using a slitter.

11. The method for producing a carbonic fiber woven fabric according to claim 10, wherein the end of said carbonic precursor woven fabric is first cut into a serrate form or a wavy form using a slitter and subsequently subjected to the carbonizing treatment.

12. A method for producing gas diffusion layer material for a solid polymer fuel cell, which comprises cutting the end of a carbonic fiber woven fabric, obtained by subjecting a carbonic precursor fiber woven fabric to a carbonizing treatment, into a serrate form or a wavy form using a slitter followed by subjecting said carbonic fiber woven fabric to a sizing treatment.
